# EUROPEAN PATENT SPECIFICATION

(11) **EP 1 901 931 B1**
(45) Date of publication and mention of the grant of the patent: **28.04.2010**
(21) Application number: 06758000.1
(22) Date of filing: 28.06.2006
(51) Int. Cl.: B60G 11/40, B60G 5/053, F16F 1/371

(54) **RUBBER SPRING FOR A VEHICLE WHEEL AXLE SUSPENSION**
GUMMIFEDER FÜR FAHRZEUGRADACHSAUFHÄNGUNG
RESSORT EN CAHOUTCHOUC POUR UNE SUSPENSION D'AXE DE ROUES DE VEHICULE

(30) Priority: 30.06.2005 SE 0501533
(43) Date of publication of application: 26.03.2008
(73) Proprietor: VOLVO LASTVAGNAR AB, 405 08 Göteborg (SE)
(72) Inventor: RANUM, Odd, S-464 91 Dals Rostock (SE); HEDLUND, Lars, S-415 14 Göteborg (SE)
(74) Representative: Fröhling, Werner Otto
(86) International application number: PCT/SE2006/000796
(87) International publication number: WO 2007/004949

(56) References cited:
- EP-A1- 0 343 891
- EP-A2- 1 362 718
- DE-A1- 4 233 106
- DE-B- 1 185 069
- DE-C- 951 975
- GB-A- 1 020 136
- JP-A- 9 039 533
- LU-A1- 41 247
- US-A- 2 633 204
- US-B1- 6 206 407

## Description

The present invention relates to a rubber spring for a vehicle wheel leaf spring suspension, said rubber spring comprising a rubber pillar attached at one end to a mounting plate adapted to be fixed to a wheel axle casing and at the opposite end to a tunnel shaped mounting member for housing an end of a spring leaf of a leaf spring suspension, said tunnel shaped mounting member having opposite interior surfaces adapted to face opposite surfaces of a spring leaf.

Previously known rubber springs designed as described above have tunnel shaped mounting members wherein the tunnel has opposite interior surfaces which are plane and parallel with one another, thereby allowing sliding but no or at the most very limited tilting movement of the rubber spring relative to the spring leaf of a leaf spring wheel suspension. This makes the mounting process rather complicated, when a wheel axle casing for a heavy truck is to be fixed to a rubber spring already mounted on the spring leaf, because all relative movement between the mounting plate and the axle casing, when aligning the mounting plate fasteners with corresponding fastening means on the axle casing, has to be concentrated to movement of the casing. Such a wheel axle casing with related components can weigh up to 1.5 ton. Therefore, all relative movement between the mounting plate on the rubber spring and the axle casing require the use of power operated jacking equipment.

DE 42 33 106 A1 discloses a suspension arrangement for a vehicle wherein a spring leaf is housed in a tunnel of an air spring. The air spring comprises a convex shaped seat for the spring leaf which is intended to absorb forces and movements between a wheel axle and the spring leaf in the vehicle suspension.

LU 41 247 A1 discloses as well as DE 42 33 106 discloses a spring body arranged between a wheel axle and a leaf spring. The spring body has a first end portion directing towards and a second end portion directing away from the leaf spring.

US-B1-6 602 407 discloses a vehicle suspension which is provided for coupling elongated frame rails to first and second axles, the axles extending in a direction transverse to the frame rails. Each axle has opposed outer and inner end portions projecting outwardly beyond the frame rails. At each side of the vehicle, in proximity to the frame rail at the respective side of the vehicle, a vehicle suspension is provided which includes a leaf spring assembly comprised of one or more leaf springs. The leaf spring assembly has first and second end portions and a central portion. The leaf spring assembly extends from the outer end portion of the first axle to the outer end portion of the second axle. A bushing is coupled to the frame rail. The bushing includes at least three arcuate reinforcing plates with elastomeric material disposed between the plates. The leaf spring assembly is coupled to the bushing, most preferably by a clamp, to thereby couple the central portion of the leaf spring to the frame rail through the bushing. A first leaf spring mount couples the first end portion of the leaf spring assembly to the outer end portion of the first axle, and a second leaf spring mount couples the second end portion of the leaf spring assembly to the outer end portion of the second axle. The mounts move in shear relative to the axles and leaf spring assembly during relative articulation of the axles.

The purpose of the present invention is to obtain a rubber spring as described by way of introduction which makes the mounting process when attaching the rubber spring to the axle casing less complicated and time consuming and therefore also less costly.

This is obtained by virtue of the fact that said opposite interior surfaces of the mounting member are shaped so as to allow tilting of the pillar relative to a first spring leaf housed in the tunnel. Said opposite interior surfaces of the mounting member are convex.

In a development of the rubber spring according to the present invention, adapted for leaf spring suspensions having a plurality of leaf spring elements stacked on top of one another, said mounting member has an upper exterior surface shaped so as to allow tilting of the pillar relative to a second spring leaf located above the first spring leaf.

Since the mounting member can slide as well as tilt relative to the spring leaf end portion all relative movements between the rubber spring and the wheel axle can be performed by manual movement of the rubber spring, thereby eliminating the need for power operated jacking equipment during the final alignment of the components.

The invention will be described in more detail with reference to the accompanying drawings, wherein
Fig. 1 is a perspective view of a portion of a previously known vehicle wheel leaf spring suspension incorporating rubber springs,
Fig. 2 is an enlargement of the rubber spring and spring leaves shown in Fig. 1,
Fig. 3 is a longitudinal section of a rubber spring according to the present invention illustrating the relative position between the rubber spring and the spring leaves when the leaf spring is unloaded,
Fig. 4 is a longitudinal section of the rubber spring shown in Fig. 3 illustrating the relative position between the rubber spring and the spring leaves when the leaf spring is loaded, and
Fig. 5 shows a cross-section of the tunnel shaped mounting member of the rubber spring shown in Fig. 3 and 4.

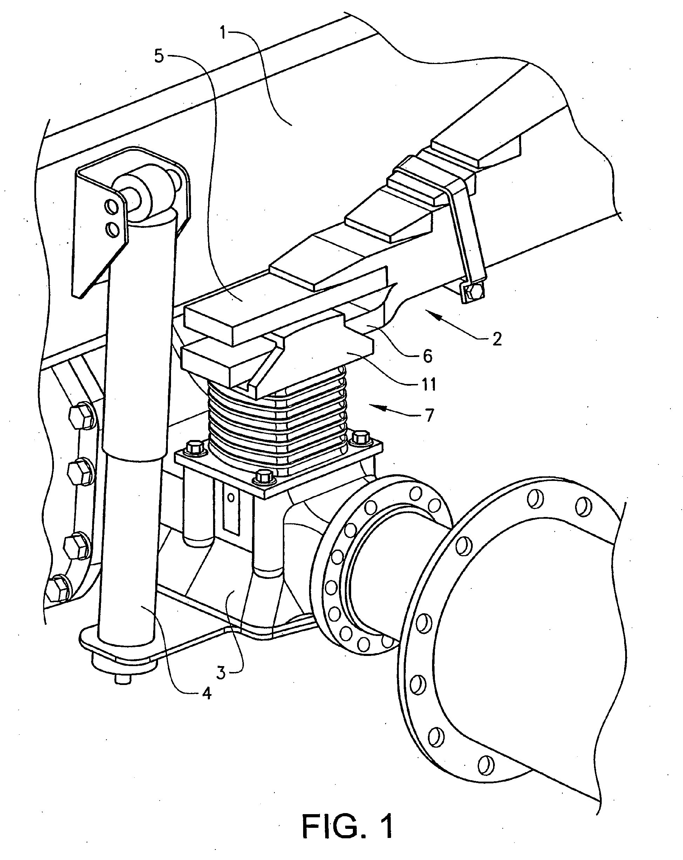

Fig. 1 shows a beam 1 of a truck frame supporting a leaf spring suspension, generally designated 2, which supports a wheel axle casing 3 on the frame beam 1. A shock absorber 4 is at one end connected to the frame beam 1 and at the other end to the wheel axle casing 3.

The leaf spring suspension 2 comprises a plurality of spring leaves, the two lower ones of which are designated 5 and 6. A rubber spring, generally designated 7, connects the lower spring leaf 6 with the wheel axle casing 3. The rubber spring 7 comprises a pillar 8 consisting of a plurality of rubber sections 9 vulcanized to intermediate metal plates 10. A tunnel shaped mounting member 11 is vulcanized to the uppermost rubber section 9 while a mounting plate 12 is vulcanized to the lowermost rubber section 9. The tunnel shaped mounting member 11 is in alternative embodiment screwed or riveted to the lowermost rubber section 9.

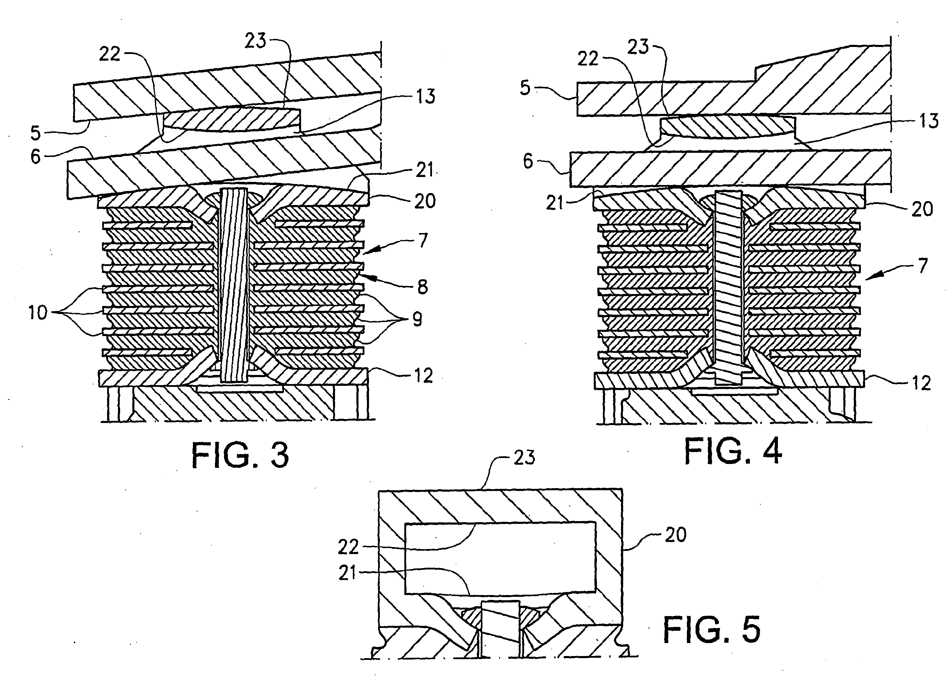

The lowermost spring leaf 6 extends through the tunnel 13 of the mounting member 11 with a slide fit while the mounting plate 12 is bolted to the wheel axle casing 3. Alignment of the interface of the wheel axle casing 3 and the mounting plate 12 with one another is a rather complicated procedure since the spring leaves, when the suspension 2 is unloaded, will be inclined in relation to a horizontal plane (see fig.3). A wheel axle 3 of the type described for a heavy truck can weigh up to one ton or even more and therefore manual alignment is not possible by tilting the wheel axle casing. Some form of power operated equipment has to be used, e.g. to load the end portion of the lower spring leaf 6 to a horizontal position before alignment.

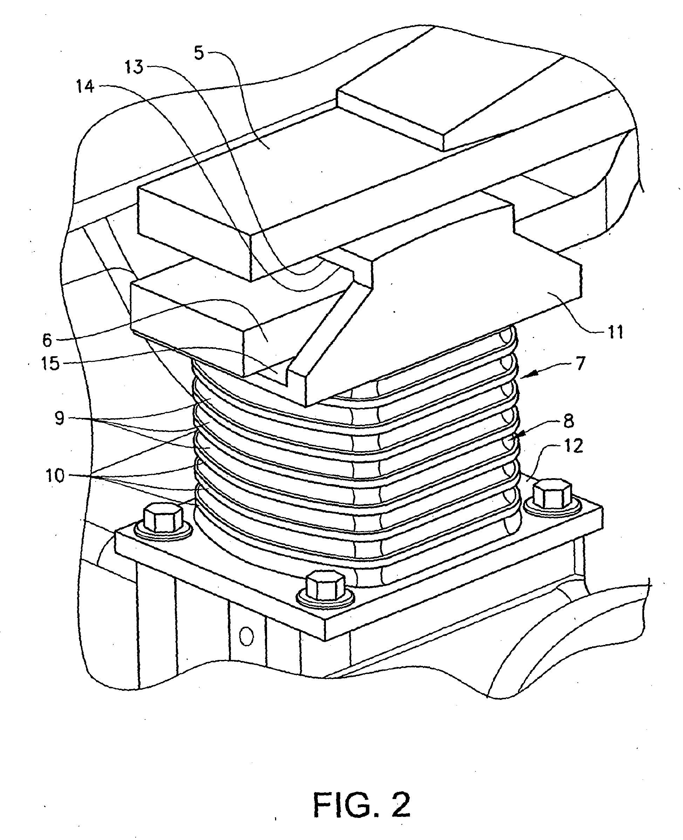

The description above refers to a prior art leaf spring suspension. As is clearly shown in fig. 2 the upper and lower surfaces 14 and 15 are plane and parallel with one another and since the leaf spring extends through the tunnel 13 with a slide fit no tilting of the rubber spring 7 relative to the spring leaf 6 is possible. The rubber spring 7 according to the present invention (figs. 3-5) differs from the one described above only in that it has a mounting member 20 which is slightly modified compared to the mounting member 11. As can be clearly seen in figs. 3 and 4 the mounting member 20 has opposite interior surfaces 21 and 22 which are convex in shape. This means that the rubber spring 7 can be tilted relative to the unloaded leaf springs 5 and 6 (fig.3) so as to be placed in a vertical position. Subsequently, after bolting the lower mounting plate 12 to the wheel axle casing 3 and loading the spring suspension, the rubber spring 7 and the leaf springs will have the position shown in fig. 4.

In an embodiment of that type which is shown in figs. 3 and 4, wherein the second lowermost spring leaf 5 extends past the upper exterior surface 23 of the mounting member 11, also the surface 23 has to be convex in order to allow tilting.

Of course within the scope of the invention other shapes than strictly convex can be used for the surfaces 21 and 22 as long as the cross-section of the tunnel 13 increases from the mid-section towards the ends and the surface 23 slopes towards the ends to allow tilting of the rubber spring 7 relative to the spring leaves 5 and 6.

## Claims

1. Rubber spring for a vehicle wheel axle suspension, said rubber spring (7) comprising a rubber pillar (8) attached at one end to a mounting plate (12) adapted to be fixed to a wheel axle casing (3) and at the opposite end to a tunnel shaped mounting member (11,20) for housing an end of a spring leaf (6) of a leaf spring suspension (2), said tunnel shaped mounting member having opposite interior surfaces (14,15;21,22) adapted to face opposite surfaces of a spring leaf (5), **characterized in that** said opposite interior surfaces (21,22) of the mounting member (20) are shaped so as to allow tilting of the pillar (8) relative to a first spring leaf (6) end housed in the tunnel (13), wherein said opposite interior surfaces (21, 22) of the mounting member (20) are convex.

2. Rubber spring according to claim 1, **characterized in that** said mounting member (20) has an upper exterior surface (23) shaped so as to allow tilting of the pillar (8) relative to a second spring leaf (5) located above the first spring leaf (6).

3. Rubber spring according to claim 2, **characterized in that** said upper exterior surface (23) is convex.

4. Rubber spring according to one of claims 1-3, **characterized in that** the rubber pillar (8) is armed with a plurality of parallel metal plates (10).

## Patentansprüche

1. Gummifeder für eine Fahrzeugradachsenaufhängung, wobei die Gummifeder (7) eine Gummisäule (8) aufweist, die an einem Ende einer Montageplatte (12), die für eine Befestigung an einem Radachsengehäuse (3) angepasst ist, und an dem gegenüberliegenden Ende an einem tunnelförmigen Montageelement (11, 20) für eine Unterbringung eines Endes eines Federblatts (6) einer Blattfederaufhängung (2) befestigt ist, wobei das tunnelförmige Montageelement gegenüberliegende Innenflächen (14, 15; 21, 22) aufweist, die so angepasst sind, dass sie gegenüberliegenden Flächen eines Federblatts (5) zugewandt sind, **dadurch gekennzeichnet, dass** die gegenüberliegenden Innenflächen (21, 22) des Montageelements (20) so geformt sind, dass eine Neigung der Säule (8) bezüglich eines Endes eines ersten Federblatts (6), das in dem Tunnel (13) untergebracht ist, ermöglicht wird, wobei die gegenüberliegenden Innenflächen (21, 22) des Montageelements (20) konvex sind.

2. Gummifeder nach Anspruch 1, **dadurch gekennzeichnet, dass** das Montageelement (20) eine obere Außenfläche (23) aufweist, die so geformt ist, dass eine Neigung der Säule (8) bezüglich eines zweiten Federblatts (5) möglich ist, das oberhalb des ersten Federblatts (6) angeordnet ist.

3. Gummifeder nach Anspruch 2, **dadurch gekennzeichnet, dass** die obere Außenfläche (23) konvex ist.

4. Gummifeder nach einem der Ansprüche 1 bis 3, **dadurch gekennzeichnet, dass** die Gummisäule (8) mit einer Vielzahl von parallelen Metallplatten (10) armiert ist.

## Revendications

1. Ressort en caoutchouc pour une suspension d'essieu de véhicule, ledit ressort en caoutchouc (7) comprenant une colonne en caoutchouc (8) fixée au niveau d'une extrémité à une plaque d'assemblage (12) adaptée pour être fixée à un carter d'essieu (3) et au niveau de l'extrémité opposée à un élément de fixation en forme de tunnel (11, 20) pour loger une extrémité d'une lame de ressort (6) d'une suspension à ressort à lames (2), ledit élément d'assemblage en forme de tunnel possédant des surfaces intérieures opposées (14, 15 ; 21, 22) adaptées pour faire face à des surfaces opposées d'une lame de ressort (5), **caractérisé en ce que** lesdites surfaces intérieures opposées (21, 22) de l'élément d'assemblage (20) sont formées de manière à permettre une inclinaison de la colonne (8) par rapport à une extrémité, logée dans le tunnel (13), d'une première lame de ressort (6), lesdites surfaces intérieures opposées (21, 22) de l'élément d'assemblage (20) étant convexes.

2. Ressort en caoutchouc selon la revendication 1, **caractérisé en ce que** ledit élément d'assemblage (20) possède une surface extérieure supérieure (23) formée de manière à permettre une inclinaison de la colonne (8) par rapport à une seconde lame de ressort (5) située au-dessus de la première lame de ressort (6).

3. Ressort en caoutchouc selon la revendication 2, **caractérisé en ce que** ladite surface extérieure supérieure (23) est convexe.

4. Ressort en caoutchouc selon l'une quelconque des revendications 1 à 3, **caractérisé en ce que** la colonne en caoutchouc (8) est renforcée avec une pluralité de plaques métalliques parallèles (10).
